# EUROPEAN PATENT APPLICATION

(11) **EP 2 924 567 A1**
(43) Date of publication of application: **30.09.2015**
(21) Application number: 13867294.4
(22) Date of filing: 18.11.2013
(51) Int. Cl.: G06F 9/45

(54) **METHOD, APPARATUS, AND ELECTRONIC DEVICE FOR BUILDING A FILE SYSTEM IN A KEY VALUE STORAGE SYSTEM**

(30) Priority: 31.12.2012 CN 201210590105
(71) Applicant: Huawei Technologies Co., Ltd., Longgang District Shenzhen, Guangdong 518129 (CN)
(72) Inventor: YUE, Yinliang, Shenzhen Guangdong 518129 (CN); XIONG, Jin, Shenzhen Guangdong 518129 (CN); ZHANG, Lixin, Shenzhen Guangdong 518129 (CN); CHEN, Mingyu, Shenzhen Guangdong 518129 (CN)
(74) Representative: Maiwald Patentanwalts GmbH
(86) International application number: PCT/CN2013/087316
(87) International publication number: WO 2014/101583

(57) **Abstract**

The present invention relates to the data storage field, and in particular, to a method and an apparatus for constructing a file system in a key-value storage system, and an electronic device. According to the method for constructing a file system in a key-value storage system disclosed by the present invention, a directory number corresponding to a directory path of a directory at each level is acquired first; then, according to the directory number and a file stored in the directory at each level, corresponding keywords Key of the directory and the file are constructed. In this case, because the directory number in the keywords Key occupies relatively small space and each directory number is unique and not repeated, storage space is effectively reduced. In addition, because the directory keyword Key corresponding to the directory is constructed according to the directory number, when an operation needs to be performed on the directory, the to-be-operated directory can be directly acquired according to the directory keyword Key, which simplifies the operation procedure.

## Description

This application claims priority to Chinese Patent Application No. 201210590105.8, filed with Chinese Patent Office on December 31, 2012 and entitled "METHOD AND APPARATUS FOR CONSTRUCTING FILE SYSTEM IN KEY-VALUE STORAGE SYSTEM, AND ELECTRONIC DEVICE", which is incorporated herein by reference in its entirety.

### TECHNICAL FIELD

The present invention relates to the data storage field, and in particular, to a method and an apparatus for constructing a file system in a key-value storage system, and an electronic device.

### BACKGROUND

A KV (Key-Value, key-value) storage system is a representative of a non-relational database and lifts a strict limitation on a relationship between a field structure and a table in a relational database. By enabling a key value to correspond to stored data and using a simplified data model, the KV key-value storage system has the following advantages: First, high scalability: because there is no strict limitation on a relationship between a field structure and a table, distributed applications can be easily deployed on several servers in the KV key-value storage system, thereby improving scalability of the entire system and achieving higher convenience and flexibility; second, adaptation to mass storage and high throughput capabilities required for cloud computing. The KV key-value storage system can better meet a flexible requirement of a user for scalability in a cloud computing environment. Therefore, the KV key-value storage system gradually becomes a mainstream storage platform.

A difference from a conventional manner of constructing a file system based on logical address space of a disk or disk array is that, when a file system is constructed in a KV key-value storage system, metadata and data of the tile system must be accessed in a Key-Value manner, where the Key is a preset keyword, and the Value is data that is stored in a database and that is corresponding to the keyword. Therefore, a constitution manner of the Key is critical to design of constructing the file system based on the KV key-value storage system.

In the prior art, there are mainly two manners of constructing a Key: one is to use a hash value of file content as the Key, and the other one is to use an absolute file path as the Key. However, during the research of this application, the inventor finds that there are some problems in the two Key constructing manners. For example, using the hash value of the file content as the Key is applicable only to a read-only file; otherwise, when the file content is changed, its hash value is changed, which further causes the Key to change and affects file search. Therefore, the manner of using the absolute file path as the Key is commonly used. However, when the absolute file path is used as the Key, absolute file paths have a same prefix directory, and repeated prefix directories occupy large storage space. Furthermore, when an operation is performed on a directory, for example, listing files in the directory or renaming the directory, absolute file paths that use a same directory path as a prefix are first used as Keys to acquire all the files in the directory, and an operation is then performed on all the files, so as to complete the corresponding operation on the directory. The operation procedure is complex.

### SUMMARY

In view of this, the present invention is intended to provide a method for constructing a file system in a key-value storage system, and specific implementation solutions are as follows:

A first aspect of the method for constructing a file system in a key-value storage system includes:
acquiring a directory at each level in the file system, and acquiring a directory number corresponding to a directory path of the directory at each level;
constructing, according to the directory number and a file stored in the directory at each level, keywords of the directory and the file; and
constructing and storing mapping relationships between the keywords and directory metadata, file metadata, the directory, and the file.

With reference to the first aspect, in a first possible implementation manner of the first aspect, the procedure for constructing the keywords includes:
when a constructed keyword is a keyword of a directory, using a directory number corresponding to the directory as the keyword of the directory;
when a constructed keyword is a keyword of a complete file, acquiring a directory number corresponding to a prefix directory of the file, and constructing information, which includes the directory number and a name of the file, as the keyword of the file; and
when a constructed keyword is a keyword of a fragmented file, acquiring a directory number corresponding to a prefix directory of the fragmented file, and a number of each file fragment; and constructing information, which includes the directory number, a file name, and the number of each file fragment, as a keyword of each file fragment.

Correspondingly, the present invention further discloses an apparatus for constructing a file system in a key-value storage system. A first aspect of the apparatus for constructing a file system in a key-value storage system includes:
a directory number acquiring module, configured to acquire a directory at each level in the file system, and acquire a directory number corresponding to a directory path of the directory at each level;
a keyword constructing module, configured to construct, according to the directory number and a file stored in the directory at each level, keywords of the directory and the file; and
a mapping relationship constructing module, configured to construct and store mapping relationships between the keywords and directory metadata, file metadata, the directory, and the file.

With reference to the first aspect, in a first possible implementation manner of the first aspect, the mapping relationship constructing module includes:
a first constructing unit, configured to: when a constructed keyword is a keyword of a directory, use a directory number corresponding to the directory as the keyword of the directory;
a second constructing unit, configured to: when a constructed keyword is a keyword of a complete file, acquire a directory number corresponding to a prefix directory of the file, and construct information, which includes the directory number and a name of the file, as the keyword of the file; and
a third constructing unit, configured to: when a constructed keyword is a keyword of a fragmented file, acquire a directory number corresponding to a prefix directory of the fragmented file, and a number of each file fragment; and construct information, which includes the directory number, a file name, and the number of each file fragment, as a keyword of each file fragment.

Correspondingly, the present invention further discloses an electronic device, where the electronic device includes the foregoing apparatus for constructing a file system in a key-value storage system.

In addition, the present invention further discloses an electronic device, where the electronic device includes a processor and a memory connected to the processor, where
the processor is configured to: acquire a directory at each level in a file system; acquire a directory number corresponding to a directory path of the directory at each level; construct, according to the directory number and a file stored in the directory at each level, keywords of the directory and the file; and construct and store mapping relationships between the keywords and directory metadata, file metadata, the directory, and the file; and
the memory is configured to store information that includes a program run by the processor.

According to the method for constructing a file system in a key-value storage system disclosed by the present invention, a directory number corresponding to a directory path of a directory at each level is acquired first; then, according to the directory number and a file stored in the directory at each level, corresponding keywords Key of the directory and the file are constructed. In this case, because the directory number in the keywords Key occupies relatively small space and each directory number is unique and not repeated, storage space is effectively reduced. In addition, because the directory keyword Key corresponding to the directory is constructed according to the directory number, when an operation needs to be performed on the directory, the to-be-operated directory can be directly acquired according to the directory keyword Key, which simplifies the operation procedure.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a Key-Value storage form in a key-value storage system;
FIG. 2 is a schematic diagram of a working procedure of a method for constructing a file system in a key-value storage system according to an embodiment of the present invention;
FIG. 3 is a schematic diagram of a working procedure for acquiring a to-be-read file in the method for constructing a file system in a key-value storage system according to the embodiment of the present invention;
FIG. 4 is a schematic diagram of a working procedure for acquiring a to-be-written file in the method for constructing a file system in a key-value storage system according to the embodiment of the present invention;
FIG. 5 is a schematic diagram of a working procedure for listing a file in a same directory in the method for constructing a file system in a key-value storage system according to the embodiment of the present invention;
FIG. 6 is a schematic diagram of a working procedure for performing a rename operation on a directory in the method for constructing a file system in a key-value storage system according to the embodiment of the present invention;
FIG. 7 is a schematic diagram of a working procedure for changing directory path access permission in the method for constructing a file system in a key-value storage system according to the embodiment of the present invention;
FIG. 8 is a schematic diagram of a working procedure for changing file path access permission in the method for constructing a file system in a key-value storage system according to the embodiment of the present invention;
FIG. 9 is a schematic structural diagram of an apparatus for constructing a file system in a key-value storage system according to an embodiment of the present invention;
FIG. 10 is a schematic structural diagram of a mapping relationship constructing module in the apparatus for constructing a file system in a key-value storage system according to the embodiment of the present invention;
FIG 11 is a schematic structural diagram of a reading module in the apparatus for constructing a file system in a key-value storage system according to the embodiment of the present invention;
FIG 12 is a schematic structural diagram of a writing module in the apparatus for constructing a file system in a key-value storage system according to the embodiment of the present invention;
FIG. 13 is a schematic structural diagram of a listing module in the apparatus for constructing a file system in a key-value storage system according to the embodiment of the present invention;
FIG. 14 is a schematic structural diagram of a renaming module in the apparatus for constructing a file system in a key-value storage system according to the embodiment of the present invention;
FIG. 15 is a schematic structural diagram of a directory path permission changing module in the apparatus for constructing a file system in a key-value storage system according to the embodiment of the present invention; and
FIG. 16 is a schematic structural diagram of a file path permission changing module in the apparatus for constructing a file system in a key-value storage system according to the embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

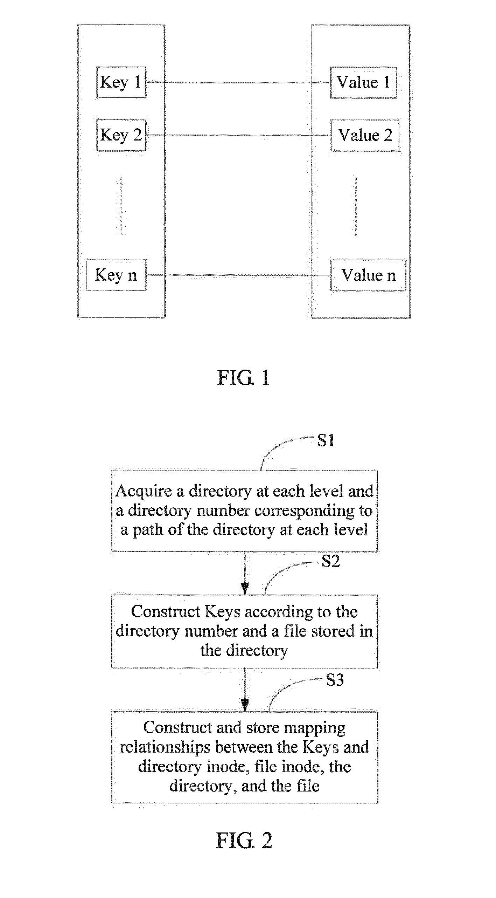

Refer to FIG 1, which shows a schematic structural diagram of a KV key-value storage system. In the KV key-value storage system, a keyword, namely a Key, is created in advance, data stored in the storage system, namely a Value, is created, and a mapping relationship between the Key and the Value, which is called a Key-Value form <Key, value>, is also created. Therefore, the data Value stored in the KV key-value storage system can be acquired according to the keyword Key.

In order to resolve problems in the prior art that in a KV key-value storage system, occupied storage space is large when a file system is constructed according to a keyword Key, and a process is complex when data stored in the storage system is acquired according to the keyword, the present invention provides a method for constructing a file system in a key-value storage system. Refer to FIG. 2, which shows a schematic diagram of a working procedure. The method for constructing a file system in a key-value storage system includes the flowing steps:

Step S1. Acquire a directory at each level in the file system, and acquire a directory number dirid corresponding to a directory path of the directory at each level.

The directory number dirid corresponding to each directory is unique, and may be a numeric number, such as 1, 2, or 3. For example, in the file system, if a directory path of a directory is "/home/patent/2011dir/", a directory number dirid being 1 may be created for the directory path. Correspondingly, a directory path of an upper-level directory is "/home/patent/" and also called a prefix directory of the directory, and another directory number dirid being 2 may be created. Certainly, the dirid may also be created in another form, which is not limited in the present invention.

Step S2. According to the directory number, and a file stored in the directory at each level, construct keywords Key of the directory and the file.

Step S3. Construct and store mapping relationships between the keywords Key and the directory, the file, directory metadata inode, and file metadata inode.

Indexes, an owner, access permission, and the like of the directory and the file in the storage system are pre-stored in the directory metadata inode and the file metadata inode.

After the keywords Key of the directory and the file are constructed according to the directory number and the file stored in the directory, and the mapping relationships between the keywords and the directory metadata inode and the file metadata inode are constructed and stored, the metadata can be acquired according to the keywords, so as to learn whether there is permission to perform an operation on the directory and the file. When there is the permission to perform an operation on the directory and the file, the corresponding directory and file can be acquired according to the keywords, so as to perform the operation on the directory and the file.

Correspondences between the keywords Key and the directory and the file are stored, so that the directory and the file corresponding to the keywords can be acquired according to the keywords.

According to the method for constructing a file system in a key-value storage system disclosed by the present invention, a directory number corresponding to a directory path of a directory at each level is acquired first; then, according to the directory number and a file stored in the directory at each level, corresponding keywords Key of the directory and the file are constructed. In this case, because the directory number in the keywords Key occupies relatively small space and each directory number is unique and not repeated, storage space is effectively reduced. In addition, because the directory keyword Key corresponding to the directory is constructed according to the directory number, when an operation needs to be performed on the directory, the to-be-operated directory can be directly acquired according to the directory keyword Key, which simplifies the operation procedure.

Further, in step S2, the procedure for constructing the keywords Key includes:
when a constructed keyword is a keyword of a directory, using a directory number corresponding to the directory as the keyword of the directory;
when a constructed keyword is a keyword of a complete file, acquiring a directory number corresponding to a prefix directory of the file, and constructing information, which includes the directory number and a name of the file, as the keyword of the file; and
when a constructed keyword is a keyword of a fragmented file, acquiring a directory number corresponding to a prefix directory of the fragmented file, and a number of each file fragment; and constructing information, which includes the directory number, a file name, and the number of each file fragment, as a keyword of each file fragment.

When the constructed keyword is the keyword of the directory, a directory number corresponding to a directory path of the directory can be used as the keyword of the directory; in this case, a Key-Value form of the directory is <dirid, value>, and a quantity of entries is a total quantity of directories at all levels. For example, when a directory number of a directory path "/home/patent/2011dir/" is set to 1, a keyword of a directory is 1, and the directory may be acquired according to a mapping relationship between the keyword and the directory.

When the constructed keyword is the keyword of the complete file, the keyword of the file includes the directory number and the name of the file. For example, if a file named "pat1" is stored in a file system and a file path of the file is "/home/patent/2011dir/pat1", "/home/patent/2011dir" is a prefix directory of the file. When a directory number dirid of this prefix directory is 1, a keyword of the file "pat1" may be "1/pat1", and certainly may also be represented in another form. In this case, a file Key-Value form is <dirid/filename, value>, and a quantity of entries is a total quantity of files.

In the KV key-value storage system, when stored data is a file, the file may be stored as a complete file, that is, in a form of one Value; or the file may be fragmented and stored as multiple file fragments, that is, in a form of multiple Values. After the file is fragmented, keywords are constructed for the fragmented file. When a keyword is constructed for each file fragment, the keyword is set to include directory number, file name, and file fragment number information. For example, the file "pat1" is divided into multiple file fragments, and numbers of the file fragments are 1, 2, 3, and so on; then, a keyword of the first file fragment includes the directory number of the prefix directory, the file name, and a file fragment number 1, may be represented in a form of "1/pate/1", and certainly may be represented in another form.

When keyword construction is implemented according to the method described in step S1 to step S3, in practical application, another operation, for example, reading file content and writing data into a file, further needs to be performed on the file system.

In addition, the file system provides a portable operating system interface (Portable Operating System Interface, POSIX) externally, while the KV key-value storage system provides a simple I/O input/output interface externally, such as PUT put, GET get, and DELETE delete. By invoking the interfaces provided by the KV key-value storage system, the file system constructed based on the key-value storage system may be connected to the outside, such as an upper-layer application system.

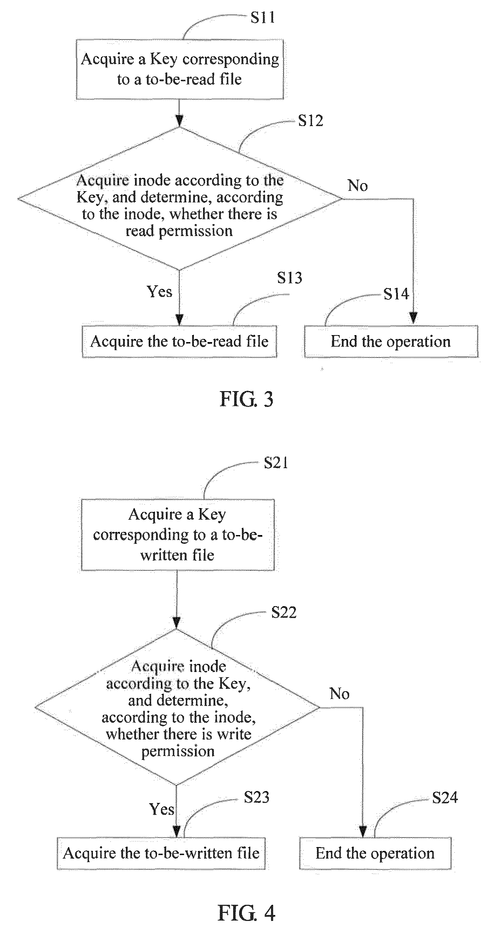

Refer to FIG 3, which shows a schematic diagram of a working procedure. After the keywords are constructed, when file content needs to be read, that is, a Read operation needs to be performed on the KV key-value storage system, the following steps are included:
Step S 11. When the file content needs to be read, acquire a keyword corresponding to a to-be-read file. When the keyword is acquired, the keyword of the file can be acquired according to a prefix directory and a file name of the to-be-read file; if the file is a fragmented file, the keyword can be acquired according to the prefix directory and the file name of the file, and a number of each file fragment.
Step S12. Acquire metadata inode of the to-be-read file according to the keyword; determine, according to the metadata, whether there is read permission; and when there is the read permission, perform an operation in step S13; or when there is no read permission, perform an operation in step S 14.
Step S13. When there is the read permission, acquire the to-be-read file according to the keyword, so as to perform the read operation.
Step S 14. End the operation.

In the foregoing method, when the read operation is performed, an upper-layer application program may acquire the to-be-read file from the KV key-value storage system by using a GET interface.

After the upper-layer application program acquires the to-be-read file, the upper-layer application program may capture, according to a start address of to-be-read content and a size of the to-be-read content, content of [offset, offset+size) in a KV database, and display the content, where offset represents a start address of an I/O operation, and size indicates a size of an I/O. In this method, offset represents the start address of the content to be read this time, and size represents a size of data that is output this time. Capturing the content of [offset, offset+size) and returning it to the upper-layer application for display may enable the staff to acquire the to-be-read content in the file. If the file is a fragmented file, after content of multiple file fragments corresponding to [offset, offset+size) is captured, the file content needs to be spliced according to numbers of the file fragments, and displayed by the upper-layer application.

Refer to FIG. 4, which shows a schematic diagram of a working procedure. After the keywords are constructed, when data needs to be written into a file, that is, a Write operation needs to be performed, the following steps are included:

Step S21. When the data needs to be written into the file, acquire a keyword corresponding to the to-be-written file. When the keyword is acquired, the keyword of the file can be acquired according to a prefix directory and a file name of the to-be-read file; if the file is a fragmented file, the keyword can be acquired according to the prefix directory and the file name of the file, and a number of each file fragment.

Step S22. Acquire metadata inode of the to-be-written file according to the keyword; determine, according to the metadata inode, whether there is write permission; and when there is the write permission, perform an operation in step S23; or when there is no write permission, perform an operation in step S24.

Step S23. Acquire the to-be-written file according to the keyword, so as to perform the write operation.

Step S24. End the operation.

Similar to the operation of reading the file content, when the write operation is performed, the upper-layer application program acquires the to-be-written file from the KV key-value storage system by using the GET interface, updates data of [offset, offset+size) in file data, and puts the updated data into the KV key-value storage system by using a PUT interface. In this case, offset indicates a start address of to-be-written data in the file, and size indicates a size of the data that is input this time. After the write operation is complete, the written file is stored into the KV key-value storage system by using the PUT interface.

In addition, when the data of [offset, offset+size) in the file data is updated and the updated data is stored into the KV key-value storage system, if the to-be-written file includes multiple file fragments, the file fragments are updated separately, updated file content is spliced according to numbers of the file fragments, and then the spliced file content is written into the KV key-value storage system.

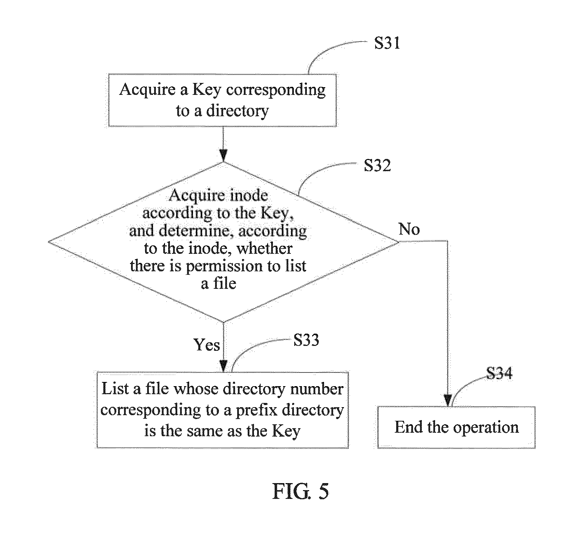

Refer to FIG. 5, which shows a schematic diagram of a working procedure. After the keywords are constructed, when a file in a same directory needs to be listed, that is, a Readdir operation needs to be performed on the KV key-value storage system, the following steps are included:
Step S31. When the file in the same directory needs to be listed, acquire a keyword corresponding to the directory. When the keyword is acquired, a directory number corresponding to a directory path, namely the keyword corresponding to the directory is acquired according to the directory path of the directory.
Step S32. Acquire metadata inode of the directory according to the keyword; determine, according to the metadata, whether there is permission to list the file in the directory; and when there is the permission to list the file in the directory, perform an operation in step S33; or when there is no permission to list the file in the directory, perform an operation in step S34.
Step S33. When there is the permission to list the file in the directory, list, according to the keyword, a file whose directory number corresponding to a prefix directory path is the same as the keyword of the directory.
Step S34. End the operation.

For example, when a file path of a file named "pat1" is "/home/patent/2011dir/pat1" a prefix directory of the file is "/home/patent/2011dir/". When a directory number corresponding to the path is the same as a keyword of a to-be-operated directory, it indicates that the file is a file stored in the directory. When a file whose directory number corresponding to a prefix directory path is the same as the keyword of the directory is listed, it is implemented that all files in the directory are listed.

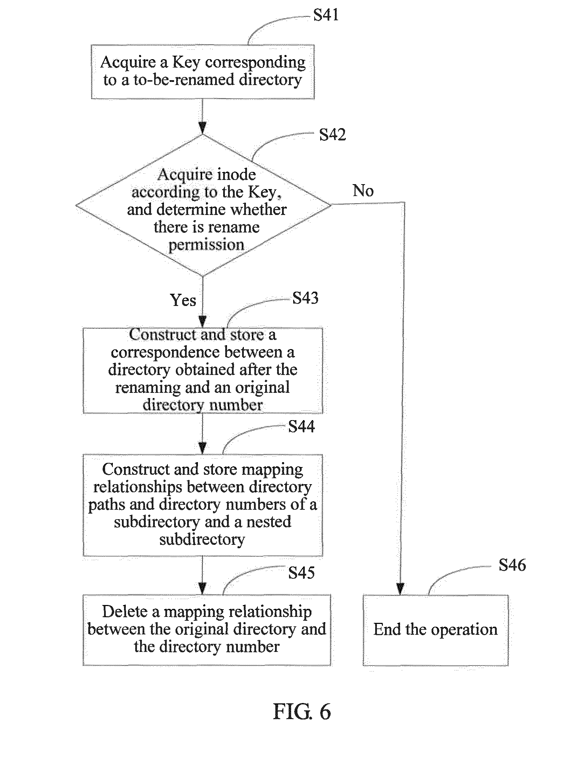

Refer to FIG. 6, which shows a schematic diagram of a working procedure. After the keywords are constructed, when a directory needs to be renamed, that is, a rename operation needs to be performed, the following steps are included:
Step S41. When the directory needs to be renamed, acquire a keyword corresponding to the to-be-renamed directory.
Step S42. Acquire metadata inode of the to-be-renamed directory according to the keyword; determine, according to the metadata inode, whether there is permission to rename the directory; and when there is the permission to rename the directory, perform an operation in step S43; or when there is no permission to rename the directory, perform an operation in step S46.
Step S43. When there is the permission to rename the directory, after the rename operation is performed on the to-be-renamed directory, construct and store a mapping relationship between a directory number corresponding to the original directory and a directory obtained after the renaming, where the original directory is a directory before the rename operation is performed.

After the mapping relationship between the directory number corresponding to the original directory and the directory obtained after the renaming is constructed, the directory obtained after the renaming may be acquired according to the original directory number, and there is no need to construct a new directory number.

Step S44. Construct and store mapping relationships between directory paths, which are of a subdirectory and its nested subdirectory in the directory obtained after the renaming, and directory numbers of the subdirectory and the nested subdirectory.

After the rename operation is performed on the directory, directory paths of all subdirectories and all nested subdirectories in the directories change correspondingly. Therefore, new mapping relationships between the directory paths, which are of the subdirectory and the nested subdirectory, and the directory numbers of the subdirectory and the nested subdirectory need to be constructed, so that the corresponding directory can be acquired correctly according to the directory number that is used as the keyword.

Step S45. Delete a mapping relationship between the original directory and the directory number from the key-value storage system.

Step S46. End the operation.

In step S44, when the mapping relationship between the original directory and the directory number is deleted, a DELETE interface may be invoked for implementation.

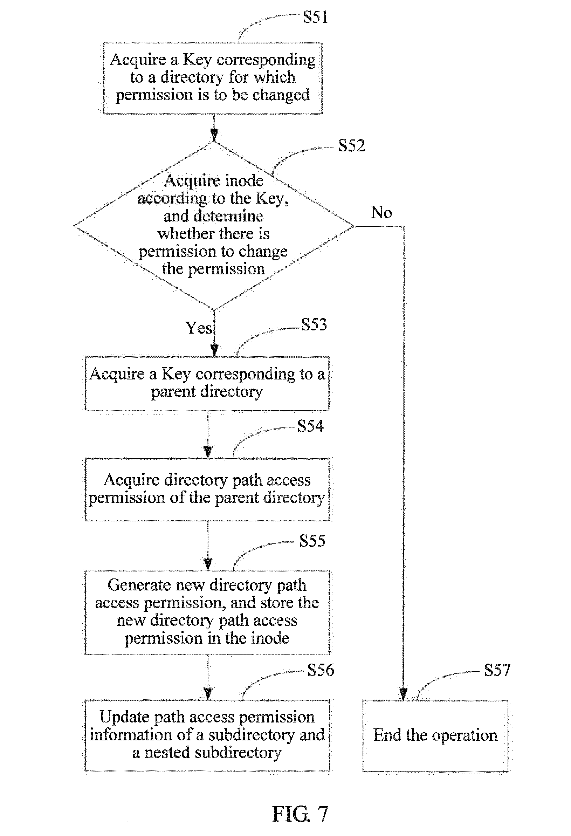

Refer to FIG. 7, which shows a schematic diagram of a working procedure. After the keywords are constructed, when permission for a directory path needs to be changed, that is, a chmod operation needs to be performed, the following steps are included:
Step S51. When the permission for the directory needs to be changed, acquire a keyword corresponding to the directory.
Step S52. Acquire, according to the keyword, directory metadata inode corresponding to the directory; determine, according to the metadata, whether there is permission to change the permission for the directory; and when there is the permission to change the permission for the directory, perform an operation in step S53; or when there is no permission to change the permission for the directory, perform an operation in step S57.
Step S53. Acquire a keyword corresponding to a parent directory of the directory. When the keyword corresponding to the parent directory is acquired, a directory path of the parent directory may be obtained according to a prefix directory of the directory, a directory number corresponding to the directory path of the parent directory is acquired, and then the keyword corresponding to the parent directory can be acquired.
Step S54. Acquire, according to the keyword corresponding to the parent directory, metadata inode corresponding to the parent directory, and acquire path access permission information of the parent directory according to the metadata inode.
Step S55. Generate updated path access permission for the directory according to the path access permission information of the parent directory and updated directory access permission information, and update, according to the updated path access permission for the directory, directory path permission information in directory metadata inode corresponding to the directory.

Each directory or file has two types of permission, namely, path access permission and directory or file access permission. The path access permission and the directory or file access permission are stored in their corresponding directory metadata inode or file metadata inode. The directory or file access permission is set by the upper-layer application program. When the path access permission and the directory or file access permission are updated, the upper-layer application program puts the updated directory or file access permission into the KV key-value storage system by using the PUT interface; after the updated directory or file access permission is acquired, updated path access permission is generated by using a path access permission generation rule. A path access permission generation rule for a directory is: path access permission for the directory = path access permission for a parent directory & directory access permission.

Step S56. According to the updated directory path permission information, update path access permission information of a subdirectory and its nested subdirectory in the directory.

Step S57. End the operation.

In step S56, when the path access permission information of the subdirectory in the directory is updated, the directory for which path permission has been updated is used as a parent directory of the subdirectory, and path access permission for the subdirectory is generated according to directory access permission information of the subdirectory and a path access permission generation rule for the directory, where the directory access permission information of the subdirectory is transmitted to the KV key-value storage system by the upper-layer application program.

When path access permission for the nested subdirectory is updated, the subdirectory is used as a parent directory of the nested subdirectory, and the path access permission for the nested subdirectory is updated in the foregoing manner.

According to the method for updating path access permission disclosed by the foregoing solution, when path access permission for a directory is changed, path access permission for a subdirectory and a nested subdirectory at each level in the directory are updated, and updated path access permission information is stored in their corresponding metadata inode.

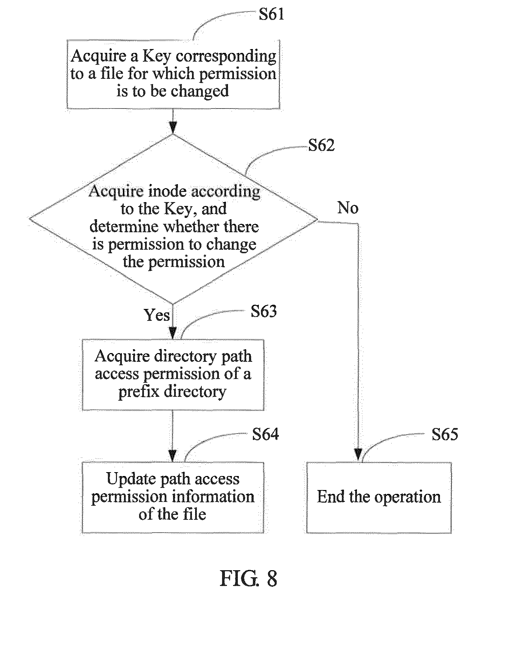

Refer to FIG. 8, which shows a schematic diagram of a working procedure. After the keywords are constructed, when path access permission for a file needs to be changed, that is, a chmod operation needs to be performed, the following steps are included:
Step S61. When permission for the file needs to be changed, acquire a keyword corresponding to the file.
Step S62. Acquire file metadata corresponding to the file according to the keyword; determine, according to the metadata, whether there is permission to change the permission for the file; and when there is the permission to change the permission for the file, perform an operation in step S63; or when there is no permission to change the permission for the file, perform an operation in step S65.
Step S63. Acquire path access permission information of a prefix directory of the file.

Specifically, when path access permission for the prefix directory is acquired, a keyword corresponding to the prefix directory is first acquired, prefix directory metadata inode corresponding to the prefix directory is then acquired according to the keyword, and further, the path access permission information of the prefix directory is acquired.

Step S64. Generate updated path access permission for the file according to the path access permission information of the prefix directory and updated file access permission information, and update file path permission information in the file metadata corresponding to the file.

A path access permission generation rule for a file is: path access permission for the file = path access permission for a prefix directory & file access permission.

Step S65. End the operation.

According to the method for constructing a file system in a key-value storage system disclosed by the present invention, a directory number corresponding to a directory path of a directory at each level is acquired first; then, according to the directory number and a file stored in the directory at each level, corresponding keywords Key of the directory and the file are constructed. In this case, because the directory number in the keywords Key occupies relatively small space and each directory number is unique and not repeated, storage space is effectively reduced. In addition, because the directory keyword Key corresponding to the directory is constructed according to the directory number, when an operation needs to be performed on the directory, the to-be-operated directory can be directly acquired according to the directory keyword Key, which simplifies the operation procedure.

Specifically, in the prior art, if an absolute file path is used as a Key, each file is corresponding to one record in a key-value storage system. A quantity N of records corresponding to a directory is equal to the sum of a quantity N1 of all files included in the directory and a quantity N2 of all files included in a nested subdirectory of the directory, that is, N=N1+N2. When a rename operation needs to be performed on a directory, all N records corresponding to the directory need to be extracted from the key-value storage system, and the N records are written into the key-value storage system after a Key is updated, that is, the operation needs to be performed for N times.

However, according to the method disclosed in the present application, each directory is corresponding to one directory number, and a quantity of records corresponding to a directory is equal to a total quantity M of subdirectories included in the directory. The quantity M is far less than the quantity N of records corresponding to a directory in the foregoing technical solution in which an absolute file path is used as a keyword Key. When a rename operation is performed on a directory, all M records corresponding to the directory need to be extracted from a key-value storage system, and the M records are written into the key-value storage system after a Key is updated, that is, the operation needs to be performed for M times.

By comparison, the quantity N of times of the operation on the directory in the prior art is much greater than the quantity M of times in the method disclosed in the solution. In addition, when each operation is performed, a Key-Value pair in the prior art is <absolute file path, file content>, while in the method disclosed in the solution, a Key-Value pair is <directory number, directory content>, or <directory number/file name, file content>, or <directory number/file name/file fragment number, file fragment content>. Compared with the absolute file path, the directory number, the directory number/file name, and the directory number/file name/file fragment number occupy less storage space.

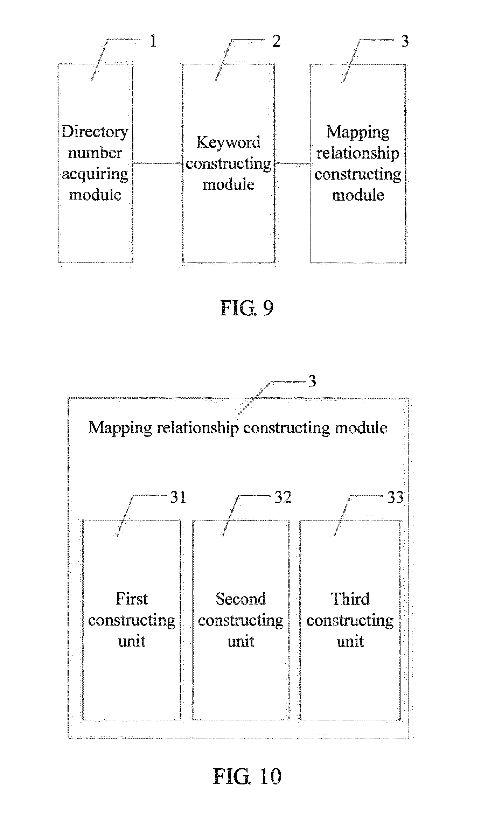

Correspondingly, the present invention further discloses an apparatus for constructing a file system in a key-value storage system. Refer to FIG. 9, which shows a schematic structural diagram. The apparatus includes a directory number acquiring module 1, a keyword constructing module 2, and a mapping relationship constructing module 3, where
the directory number acquiring module 1 is configured to acquire a directory at each level in the file system, and acquire a directory number corresponding to a directory path of the directory at each level;
the keyword constructing module 2 is configured to construct, according to the directory number and a file stored in the directory at each level, keywords of the directory and the file; and
the mapping relationship constructing module 3 is configured to construct and store mapping relationships between the keywords and directory metadata, file metadata, the directory, and the file.

Refer to FIG. 10, which shows a schematic structural diagram. The mapping relationship constructing module 3 includes a first constructing unit 31, a second constructing unit 32, and a third constructing unit 33, where
the first constructing unit 31 is configured to: when a constructed keyword is a keyword of a directory, use a directory number corresponding to the directory as the keyword of the directory;
the second constructing unit 32 is configured to: when a constructed keyword is a keyword of a complete file, acquire a directory number corresponding to a prefix directory of the file, and construct information, which includes the directory number and a name of the file, as the keyword of the file; and
the third constructing unit 33 is configured to: when a constructed keyword is a keyword of a fragmented file, acquire a directory number corresponding to a prefix directory of the fragmented file, and a number of each file fragment; and construct information, which includes the directory number, a file name, and the number of each file fragment, as a keyword of each file fragment.

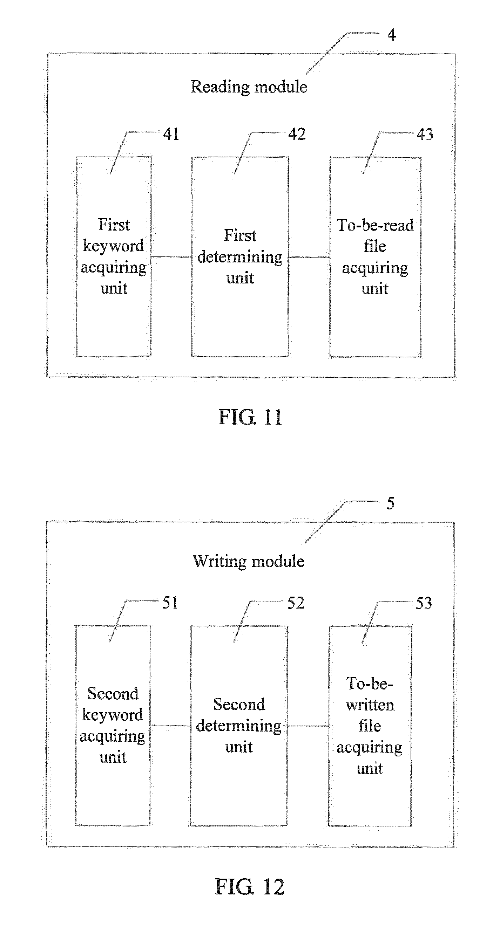

Further, refer to FIG. 11, which shows a schematic structural diagram. The apparatus for constructing a file system in a key-value storage system further includes a reading module 4, where the reading module 4 includes a first keyword acquiring unit 41, a first determining unit 42, and a to-be-read file acquiring unit 43, where
the first keyword acquiring unit 41 is configured to: when file content needs to be read, acquire a keyword corresponding to a to-be-read file;
the first determining unit 42 is configured to acquire metadata of the to-be-read file according to the keyword, and determine, according to the metadata, whether there is read permission; and
the to-be-read file acquiring unit 43 is configured to: when there is the read permission, acquire the to-be-read file according to the keyword, so as to perform a read operation.

Further, refer to FIG. 12, which shows a schematic structural diagram. The apparatus for constructing a file system in a key-value storage system further includes a writing module 5, where the writing module 5 includes a second keyword acquiring unit 51, a second determining unit 52, and a to-be-written file acquiring unit 53, where
the second keyword acquiring unit 51 is configured to: when data needs to be written into a file, acquire a keyword corresponding to the to-be-written file;
the second determining unit 52 is configured to acquire metadata of the to-be-written file according to the keyword, and determine, according to the metadata, whether there is write permission; and
the to-be-written file acquiring unit 53 is configured to: when there is the write permission, acquire the to-be-written file according to the keyword, so as to perform a write operation.

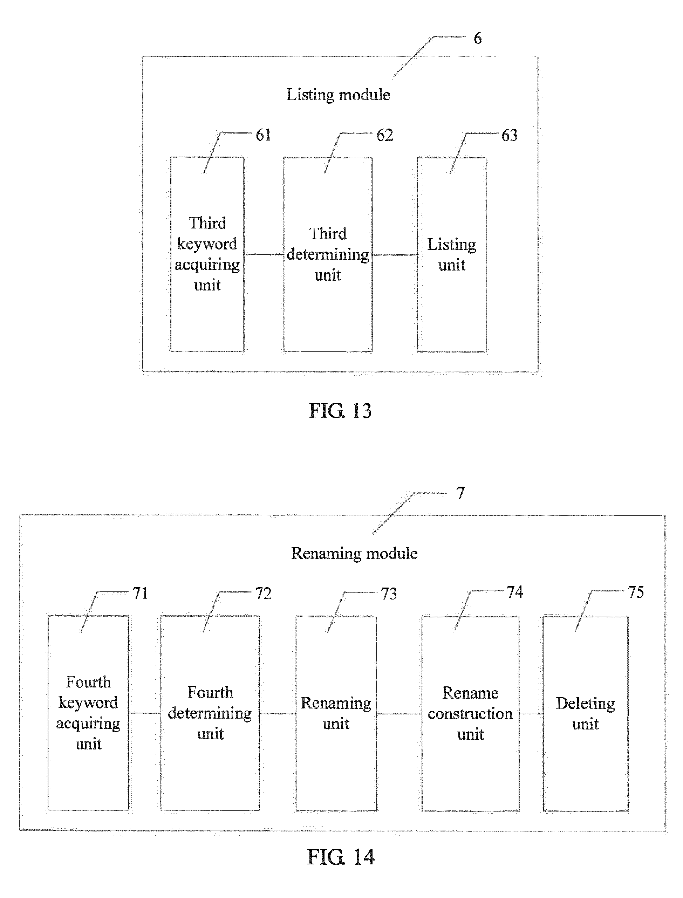

Further, refer to FIG. 13, which shows a schematic structural diagram. The apparatus for constructing a file system in a key-value storage system further includes a listing module 6, where the listing module 6 includes a third keyword acquiring unit 61, a third determining unit 62, and a listing unit 63, where
the third keyword acquiring unit 61 is configured to: when a file in a same directory needs to be listed, acquire a keyword corresponding to the directory;
the third determining unit 62 is configured to acquire metadata of the directory according to the keyword, and determine, according to the metadata, whether there is permission to list the file in the directory; and
the listing unit 63 is configured to: when there is the permission to list the file in the directory, list, according to the keyword, a file whose directory number corresponding to a prefix directory path is the same as the keyword of the directory.

Further, refer to FIG. 14, which shows a schematic structural diagram. The apparatus for constructing a file system in a key-value storage system further includes a renaming module 7, where the renaming module 7 includes a fourth keyword acquiring unit 71, a fourth determining unit 72, a renaming unit 73, a rename constructing unit 74, and a deleting unit 75, where
the fourth keyword acquiring unit 71 is configured to: when a directory needs to be renamed, acquire a keyword corresponding to the to-be-renamed directory;
the fourth determining unit 72 is configured to acquire metadata of the to-be-renamed directory according to the keyword, and determine, according to the metadata, whether there is permission to rename the directory;
the renaming unit 73 is configured to: when there is the permission to rename the directory, after a rename operation is performed on the to-be-renamed directory, construct and store a mapping relationship between a directory number corresponding to the original directory and a directory obtained after the renaming, where the original directory is a directory before the rename operation is performed;
the rename constructing unit 74 is configured to construct and store mapping relationships between directory paths, corresponding to a subdirectory and a nested subdirectory in the directory obtained after the renaming, and directory numbers of the subdirectory and the nested subdirectory; and
the deleting unit 75 is configured to delete a mapping relationship between the original directory and the directory number from the file storage system.

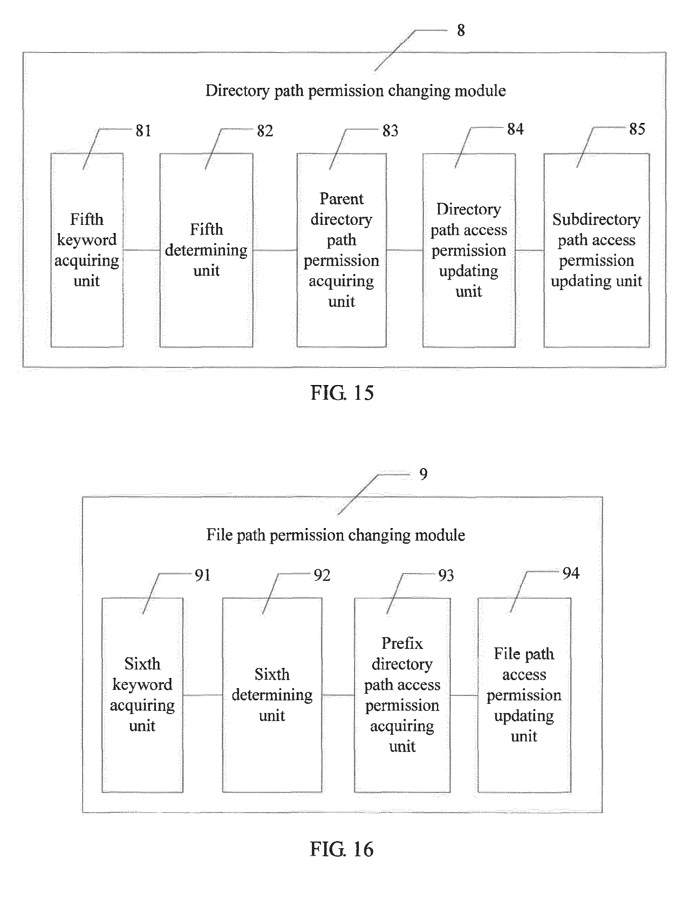

Further, refer to FIG. 15, which shows a schematic structural diagram. The apparatus for constructing a file system in a key-value storage system further includes a directory path permission changing module 8, where the directory path permission changing module 8 includes a fifth keyword acquiring unit 81, a fifth determining unit 82, a parent directory path permission acquiring unit 83, a directory path access permission updating unit 84, and a subdirectory path access permission updating unit 85, where
the fifth keyword acquiring unit 81 is configured to: when path access permission for a directory needs to be changed, acquire a keyword corresponding to the directory;
the fifth determining unit 82 is configured to acquire metadata of the corresponding directory according to the keyword, and determine, according to the metadata, whether there is permission to change permission for the directory;
the parent directory path permission acquiring unit 83 is configured to: when there is the permission to change the permission for the directory, acquire a keyword corresponding to a parent directory of the directory, and acquire path access permission information of the parent directory according to the keyword;
the directory path access permission updating unit 84 is configured to generate updated path access permission for the directory according to the path access permission information of the parent directory and updated directory access permission information, and update directory path permission information in directory metadata corresponding to the directory; and
the subdirectory path access permission updating unit 85 is configured to update, according to the updated directory path permission information, path access permission information in directory metadata corresponding to a subdirectory and its nested subdirectory in the directory.

Further, refer to FIG. 16, which shows a schematic structural diagram. The apparatus for constructing a file system in a key-value storage system further includes a file path permission changing module 9, where the file path permission changing module 9 includes a sixth keyword acquiring unit 91, a sixth determining unit 92, a prefix directory path access permission acquiring unit 93, and a file path access permission updating unit 94, where
the sixth keyword acquiring unit 91 is configured to: when permission for a file needs to be changed, acquire a keyword corresponding to the file;
the sixth determining unit 92 is configured to acquire, according to the keyword, file metadata corresponding to the file, and determine, according to the metadata, whether there is permission to change the permission for the file;
the prefix directory path access permission acquiring unit 93 is configured to: when there is the permission to change the permission for the file, acquire a keyword corresponding to a prefix directory of the file, and acquire path access permission information of the prefix directory according to the keyword; and
the file path access permission updating unit 94 is configured to generate updated path access permission for the file according to the path access permission information of the prefix directory and updated file access permission information, and update file path access permission information in the file metadata corresponding to the file.

In the apparatus for constructing a file system in a key-value storage system disclosed by the present invention, firstly, a directory number acquiring module acquires a directory number corresponding to a directory path of a directory at each level; then, a keyword constructing module constructs, according to the directory number and a file stored in the directory at each level, corresponding keywords Key of the directory and the file; and then, a mapping relationship constructing module constructs and stores mapping relationships between the keywords and directory metadata, file metadata, the directory, and the file. In this case, because the directory number in the keywords Key occupies relatively small space and each directory number is unique and not repeated, storage space is effectively reduced. In addition, because the directory keyword Key corresponding to the directory is constructed according to the directory number, when an operation needs to be performed on the directory, the to-be-operated directory can be directly acquired according to the directory keyword Key, which simplifies the operation procedure.

Correspondingly, the present invention further discloses an electronic device, where the electronic device includes the foregoing apparatus for constructing a file system in a key-value storage system; and the apparatus for constructing a file system in a key-value storage system includes a directory number acquiring module, a keyword constructing module, and a mapping relationship constructing module, and may further includes a reading module, a writing module, a listing module, a renaming module, a directory path permission changing module, and a file permission changing module.

Correspondingly, the present invention further discloses an electronic device, where the electronic device includes a processor and a memory connected to the processor, where
the processor is configured to: acquire a directory at each level in a file system; acquire a directory number corresponding to a directory path of the directory at each level; construct, according to the directory number and a file stored in the directory at each level, keywords of the directory and the file; and construct and store mapping relationships between the keywords and directory metadata, file metadata, the directory, and the file; and
the memory is configured to store information that includes a program run by the processor.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions of the disclosed embodiments enable a person skilled in the art to implement and use the present invention. Various modifications to the embodiments are obvious to the person skilled in the art, and general principles defined in this specification may be implemented in other embodiments without departing from the spirit or scope of the present invention. Therefore, the present invention will not be limited to the embodiments described in this specification but extends to the widest scope that complies with the principles and novelty disclosed in this specification.

## Claims

1. A method for constructing a file system in a key-value storage system, comprising:
acquiring a directory at each level in the file system, and acquiring a directory number corresponding to a directory path of the directory at each level;
constructing, according to the directory number and a file stored in the directory at each level, keywords of the directory and the file; and
constructing and storing mapping relationships between the keywords and directory metadata, file metadata, the directory, and the file.

2. The method according to claim 1, wherein the procedure for constructing the keywords comprises:
when a constructed keyword is a keyword of a directory, using a directory number corresponding to the directory as the keyword of the directory;
when a constructed keyword is a keyword of a complete file, acquiring a directory number corresponding to a prefix directory of the file, and constructing information, which comprises the directory number and a name of the file, as the keyword of the file; and
when a constructed keyword is a keyword of a fragmented file, acquiring a directory number corresponding to a prefix directory of the fragmented file, and a number of each file fragment; and constructing information, which comprises the directory number, a file name, and the number of each file fragment, as a keyword of each file fragment.

3. The method according to claim 1, after the constructing keywords, further comprising:
when file content needs to be read, acquiring a keyword corresponding to a to-be-read file;
acquiring metadata of the to-be-read file according to the keyword, and determining, according to the metadata, whether there is read permission; and
when there is the read permission, acquiring the to-be-read file according to the keyword, so as to perform a read operation.

4. The method according to claim 1, after the constructing keywords, further comprising:
when data needs to be written into a file, acquiring a keyword corresponding to the to-be-written file;
acquiring metadata of the to-be-written file according to the keyword, and determining, according to the metadata, whether there is write permission; and
when there is the write permission, acquiring the to-be-written file according to the keyword, so as to perform a write operation.

5. The method according to claim 1, after the constructing keywords, further comprising:
when a file in a same directory needs to be listed, acquiring a keyword corresponding to the directory;
acquiring metadata of the directory according to the keyword, and determining, according to the metadata, whether there is permission to list the file in the directory; and
when there is the permission to list the file in the directory, listing, according to the keyword, a file whose directory number corresponding to a prefix directory path is the same as the keyword of the directory.

6. The method according to claim 1, after the constructing keywords, further comprising:
when a directory needs to be renamed, acquiring a keyword corresponding to the to-be-renamed directory;
acquiring metadata of the to-be-renamed directory according to the keyword, and determining, according to the metadata, whether there is permission to rename the directory; and
when there is the permission to rename the directory, after a rename operation is performed on the to-be-renamed directory, constructing and storing a mapping relationship between a directory number corresponding to the original directory and a directory obtained after the renaming, wherein the original directory is a directory before the rename operation is performed;
constructing and storing mapping relationships between directory paths, corresponding to a subdirectory and a nested subdirectory in the directory obtained after the renaming, and directory numbers of the subdirectory and the nested subdirectory; and
deleting a mapping relationship between the original directory and the directory number from the file system.

7. The method according to claim 1, after the constructing keywords, further comprising:
when path access permission for a directory needs to be changed, acquiring a keyword corresponding to the directory;
acquiring metadata of the corresponding directory according to the keyword, and determining, according to the metadata, whether there is permission to change permission for the directory;
when there is the permission to change the permission for the directory, acquiring a keyword corresponding to a parent directory of the directory, and acquiring path access permission information of the parent directory according to the keyword;
generating updated path access permission for the directory according to the path access permission information of the parent directory and updated directory access permission information, and updating directory path permission information in directory metadata corresponding to the directory; and
updating, according to the updated directory path permission information, path access permission information in directory metadata corresponding to a subdirectory and its nested subdirectory in the directory.

8. The method according to claim 1, after the constructing keywords, further comprising:
when permission for a file needs to be changed, acquiring a keyword corresponding to the file;
acquiring, according to the keyword, file metadata corresponding to the file, and determining, according to the metadata, whether there is permission to change the permission for the file;
when there is the permission to change the permission for the file, acquiring a keyword corresponding to a prefix directory of the file, and acquiring path access permission information of the prefix directory according to the keyword; and
generating updated path access permission for the file according to the path access permission information of the prefix directory and updated file access permission information, and updating file path access permission information in the file metadata corresponding to the file.

9. An apparatus for constructing a file system in a key-value storage system, comprising:
a directory number acquiring module, configured to acquire a directory at each level in the file system, and acquire a directory number corresponding to a directory path of the directory at each level;
a keyword constructing module, configured to construct, according to the directory number and a file stored in the directory at each level, keywords of the directory and the file; and
a mapping relationship constructing module, configured to construct and store mapping relationships between the keywords and directory metadata, file metadata, the directory, and the file.

10. The apparatus according to claim 9, wherein the mapping relationship constructing module comprises:
a first constructing unit, configured to: when a constructed keyword is a keyword of a directory, use a directory number corresponding to the directory as the keyword of the directory;
a second constructing unit, configured to: when a constructed keyword is a keyword of a complete file, acquire a directory number corresponding to a prefix directory of the file, and construct information, which comprises the directory number and a name of the file, as the keyword of the file; and
a third constructing unit, configured to: when a constructed keyword is a keyword of a fragmented file, acquire a directory number corresponding to a prefix directory of the fragmented file, and a number of each file fragment; and construct information, which comprises the directory number, a file name, and the number of each file fragment, as a keyword of each file fragment.

11. The apparatus according to claim 9, wherein the apparatus for constructing a file system in a key-value storage system further comprises a reading module, wherein the reading module comprises:
a first keyword acquiring unit, configured to: when file content needs to be read, acquire a keyword corresponding to a to-be-read file;
a first determining unit, configured to acquire metadata of the to-be-read file according to the keyword, and determine, according to the metadata, whether there is read permission; and
a to-be-read file acquiring unit, configured to: when there is the read permission, acquire the to-be-read file according to the keyword, so as to perform a read operation.

12. The apparatus according to claim 9, wherein the apparatus for constructing a file system in a key-value storage system further comprises a writing module, wherein the writing module comprises:
a second keyword acquiring unit, configured to: when data needs to be written into a file, acquire a keyword corresponding to the to-be-written file;
a second determining unit, configured to acquire metadata of the to-be-written file according to the keyword, and determine, according to the metadata, whether there is write permission; and
a to-be-written file acquiring unit, configured to: when there is the write permission, acquire the to-be-written file according to the keyword, so as to perform a write operation.

13. The apparatus according to claim 9, wherein the apparatus for constructing a file system in a key-value storage system further comprises a listing module, wherein the listing module comprises:
a third keyword acquiring unit, configured to: when a file in a same directory needs to be listed, acquire a keyword corresponding to the directory;
a third determining unit, configured to acquire metadata of the directory according to the keyword, and determine, according to the metadata, whether there is permission to list the file in the directory; and
a listing unit, configured to: when there is the permission to list the file in the directory, list, according to the keyword, a file whose directory number corresponding to a prefix directory path is the same as the keyword of the directory.

14. The apparatus according to claim 9, wherein the apparatus for constructing a file system in a key-value storage system further comprises a renaming module, wherein the renaming module comprises:
a fourth keyword acquiring unit, configured to: when a directory needs to be renamed, acquire a keyword corresponding to the to-be-renamed directory;
a fourth determining unit, configured to acquire metadata of the to-be-renamed directory according to the keyword, and determine, according to the metadata, whether there is permission to rename the directory;
a renaming unit, configured to: when there is the permission to rename the directory, after a rename operation is performed on the to-be-renamed directory, construct and store a mapping relationship between a directory number corresponding to the original directory and a directory obtained after the renaming, wherein the original directory is a directory before the rename operation is performed;
a rename constructing unit, configured to construct and store mapping relationships between directory paths, corresponding to a subdirectory and a nested subdirectory in the directory obtained after the renaming, and directory numbers of the subdirectory and the nested subdirectory; and
a deleting unit, configured to delete a mapping relationship between the original directory and the directory number from the file system.

15. The apparatus according to claim 9, wherein the apparatus for constructing a file system in a key-value storage system further comprises a directory path permission changing module, wherein the directory path permission changing module comprises:
a fifth keyword acquiring unit, configured to: when path access permission for a directory needs to be changed, acquire a keyword corresponding to the directory;
a fifth determining unit, configured to acquire metadata of the corresponding directory according to the keyword, and determine, according to the metadata, whether there is permission to change permission for the directory;
a parent directory path permission acquiring unit, configured to: when there is the permission to change the permission for the directory, acquire a keyword corresponding to a parent directory of the directory, and acquire path access permission information of the parent directory according to the keyword;
a directory path access permission updating unit, configured to generate updated path access permission for the directory according to the path access permission information of the parent directory and updated directory access permission information, and update directory path permission information in directory metadata corresponding to the directory; and
a subdirectory path access permission updating unit, configured to update, according to the updated directory path permission information, path access permission information in directory metadata corresponding to a subdirectory and its nested subdirectory in the directory.

16. The apparatus according to claim 9, wherein the apparatus for constructing a file system in a key-value storage system further comprises a file path permission changing module, wherein the file path permission changing module comprises:
a sixth keyword acquiring unit, configured to: when permission for a file needs to be changed, acquire a keyword corresponding to the file;
a sixth determining unit, configured to acquire, according to the keyword, file metadata corresponding to the file, and determine, according to the metadata, whether there is permission to change the permission for the file;
a prefix directory path access permission acquiring unit, configured to: when there is the permission to change the permission for the file, acquire a keyword corresponding to a prefix directory of the file, and acquire path access permission information of the prefix directory according to the keyword; and
a file path access permission updating unit, configured to generate updated path access permission for the file according to the path access permission information of the prefix directory and updated file access permission information, and update file path access permission information in the file metadata corresponding to the file.

17. An electronic device, comprising:
the apparatus for constructing a file system in a key-value storage system according to any one of claims 9 to 16.

18. An electronic device, wherein the electronic device comprises a processor and a memory connected to the processor, wherein
the processor is configured to: acquire a directory at each level in a file system; acquire a directory number corresponding to a directory path of the directory at each level; construct, according to the directory number and a file stored in the directory at each level, keywords of the directory and the file; and construct and store mapping relationships between the keywords and directory metadata, file metadata, the directory, and the file; and
the memory is configured to store information that comprises a program run by the processor.
